# EUROPÄISCHE PATENTSCHRIFT

(11) **EP 0 624 912 B1**
(45) Veröffentlichungstag und Bekanntmachung des Hinweises auf die Patenterteilung: **22.01.1997**
(21) Anmeldenummer: 93117955.0
(22) Anmeldetag: 05.11.1993
(51) Int. Cl.: H01L 41/09

(54) **Verstelleinrichtung mit Piezoantrieb**
Displacement device with piezoelectric actuator
Dispositif de déplacement à organe d'actionnement piézoélectrique

(30) Priorität: 07.05.1993 DE 4315238
(43) Veröffentlichungstag der Anmeldung: 17.11.1994
(73) Patentinhaber: Physik Instrumente (PI) GmbH & Co., 76337 Waldbronn (DE)
(72) Erfinder: Glöss, Rainer, Dr., D-76307 Karlsbad (DE); Marth, Harry, Dr., D-76337 Waldbronn (DE)
(74) Vertreter: Brommer, Hans Joachim, Dr.-Ing.

(56) Entgegenhaltungen:
- EP-A- 0 313 072
- US-A- 5 097 161

## Beschreibung

Die Erfindung betrifft eine Verstelleinrichtung mit einem Piezoantrieb insbesondere für feinmechanisch optische Geräte und dergleichen, bestehend aus zumindest zwei Piezotranslatoren, die durch Anlegen einer elektrischen Spannung eine Längenänderung erfahren und abwechselnd mit einem Abtriebselement in Wirkverbindung gelangen derart, daß bei bestehender Wirkverbindung eine Bewegungsübertragung auf das Abtriebselement erfolgt, wogegen bei aufgehobener Wirkverbindung der Piezotranslator eine Rückstellung zur Vorbereitung der nächsten Bewegungsübertragung erfährt, so daß das Abtriebselement die gewünschte Verstellbewegung durchführt.

Bekannte Verstelleinrichtungen mit einem Piezoantrieb sind z.B. die als "Inch-Worm" bezeichneten Linearantriebe. die auf der Basis des Klemmprinzips arbeiten ("Forschungsberichte aus der Fein- und Mikrotechnik" des Institutes für Zeitmeßtechnik, Fein- und Mikrotechnik der Universität Stuttgart und des Hahn - Schichard - Institutes für Feinwerk - und Zeitmeßtechnik Stuttgart, Ausgabe Nr. 5, 1991, "Ultraschallmotoren in der Feingerätetechnick - eine Übersicht" von Th. Stocher). Solche Antriebe bestehen aus drei Piezoelementen, nämlich aus einem parallel zum Abtriebselement angeordneten Linearpiezo und aus zwei Klemmpiezos, die an je einem Ende des Linearpiezos senkrecht zum Abtriebselement positioniert sind, wobei der eine fest, der andere verschiebbar im Gehäuse gelagert ist.

Während das Anlegen einer elektrischen Spannung bei den Klemmpiezos ein Klemmen des Abtriebsgliedes hervorruft, bewirkt dies beim Linearpiezo ein Verschieben des verschiebbaren Klemmpiezos. Befindet sich nun dieser Klemmpiezo in geklemmter Anlage an dem Abtriebselement, der festgelagerte Klemmpiezo jedoch nicht, so führt die Längenänderung des Linearpiezos aufgrund der Klemmung zur Bewegungsübertragung auf das Abtriebselement. Ist der festgelagerte Klemmpiezo aktiviert und hält das Abtriebselement unverschiebbar fest, so bewirkt bei aufgehobener Wirkverbindung des verschiebbaren Klemmpiezos eine Längenänderung des Linearpiezos eine Rückstellung zur Vorbereitung der nächsten Bewegungsübertragung.

Um ein sicheres Klemmen bzw. Öffnen und somit ein zuverlässiges Betriebsverhalten zu erreichen, unterliegen insbesondere die Klemmpiezos sehr hohen Präzisionsanforderungen. Dieser Effekt wird noch dadurch verstärkt, daß Piezoaktoren allgemein nur Stellbewegungen von wenigen Mikrometern durchführen können. Da jedoch Verschleiß und Längenschwankungen infolge von Temperatur- und sonstigen Umwelteinflüssen das Klemmverhalten stark beeinträchtigen, sind Störungen des Betriebsverhaltens aufgrund von mangelhaften oder abrupten Klemmungen unvermeidlich.

Der vorliegenden Erfindung liegt die Aufgabe zugrunde, den eingangs beschriebenen Stellantrieb weiter zu vervollkommnen, insbesondere einen Miniaturantrieb großer Schubkraft, ohne Umkehrspiel und mit Auflösung im unteren Nanometerbereich zu entwickeln, der sich durch eine möglichst gleichförmige Bewegung auszeichnet, unempfindlich gegen Temperatur- und Umwelteinflüsse ist und somit nur geringen Präzisionsanforderungen bei der Herstellung unterliegt.

Erfindungsgemäß wird die Aufgabe dadurch gelöst, daß die Piezotranslatoren durch zumindest ein Federelement in Wirkverbindung mit dem Abtriebselement bringbar sind, und daß jedem Piezotranslator ein Stellglied zugeordnet ist, das die Wirkverbindung seines Piezotranslators mit dem Abtriebselement aufhebt.

Dadurch ergibt sich der Vorteil, daß aufgrund des permanenten Andrückens durch das Federelement ein sicheres Klemmen des Abtriebselementes zu jedem Zeitpunkt gewährleistet ist, sich also immer mindestens ein Piezotranslator in Wirkverbindung mit dem Abtriebselement befindet. Das Aufheben der Wirkverbindung erfolgt durch das jeweilige Stellglied, wodurch unvermeidliche Wegdifferenzen sich nicht mehr negativ auf die Qualität der Klemmung auswirken können. Da lediglich die Relativwege und nicht die Absolutlängendifferenzen der Stellglieder für das Klemmen bzw. Abheben relevant sind, haben somit Längenschwankungen der Stellglieder durch Temperatur-, Alterungs- und Umwelteinflüsse keinen Einfluß auf ein zuverlässiges Betriebsverhalten des Piezoantriebes. Die Stellglieder können daher mit geringen Präzisionsanforderungen und somit kostengünstiger hergestellt werden.

Zur Herbeiführung der Wirkverbindung zwischen Piezotranslator und Abtriebselement bestehen verschiedene Möglichkeiten. Zum einen kann das Federelement auf das Abtriebselement einwirken, wobei dieses so breit auszuführen ist, daß es mit beiden Piezotranslatoren gleichzeitig in Wirkverbindung gelangen kann. Bei einer solchen Anordnung ändert sich die Position des Angriffspunktes am Abtriebselement in Abhängigkeit von der Stellgliedlänge, weshalb das Abtriebselement verschiebbar gelagert bzw. angeordnet sein muß. Natürlich ist es auch möglich, anstelle eines Federelementes entsprechend nachgiebige Krafterzeuger zu verwenden, etwa nur mit der Schwerkraft zu arbeiten.

Zum anderen kann das Federelement stattdessen auf die Stellglieder einwirken, wobei es besonders vorteilhaft ist, diese an einer gemeinsamen Basis zu montieren. Dadurch ist sichergestellt, daß immer das momentan längere Stellglied die Wirkverbindung garantiert, während der dem kürzeren Stellglied zugeordnete Piezotranslator seine Rückstellung durchführen kann. Hierbei muß die gemeinsame Basis ihre Winkellage relativ - im allgemeinen senkrecht - zum Stellweg beibehalten, unabhängig davon, ob und welches der Stellglieder spannungsbeaufschlagt ist. Wesentlich ist also, daß eine Verstellung der Basis zu keiner Relativbewegung zwischen den an der Basis anliegenden Stellgliedenden führt, so daß die Verkürzung eines Stellgliedes zwangsläufig das Aufheben der Wirkverbindung zwischen zugeordnetem Piezotranslator und Abtriebselement bewirkt.

Die Klemmbewegung der Stellglieder läßt sich bei geschickter Wahl der jeweiligen Anlagepunkte aufgrund von Hebelübersetzungen vergrößern, wenn die Stellglieder über Stellarme die Wirkverbindung ihrer zugehörigen Piezotranslatoren mit dem Abtriebselement herbeiführen. Dies ermöglicht eine schnellere und somit sicherere Klemmung. Hierbei ist es zweckmäßig, die Stellarme an einer gemeinsamen Basis zu montieren, auf die das Federelement einwirkt. Das Federelement gewährleistet auch hier das Andrücken an das Abtriebselement und somit das Herstellen und Aufrechterhalten der Wirkverbindung mit dem Abtriebselement, wogegen das Aufheben der Wirkverbindung abwechselnd durch die Stellglieder erfolgt.

Damit die Stellglieder in Wirkverbindung mit ihren Stellarmen gehalten werden, sind zweckmäßigerweise Federn vorgesehen, die die Stellarme gegen die Stellglieder drücken.

Um die Piezotranslatoren mit Hilfe der Stellglieder abwechselnd außer Wirkverbindung mit dem Abtriebselement zu bringen, bieten sich dem Fachmann verschiedene Möglichkeiten. Im Hinblick auf geringe Stellwege empfiehlt es sich, die Stellglieder auch als Piezoelemente oder als elektro- oder magnetostriktive Elemente auszubilden, wodurch eine optimale Klemmung erreicht wird.

Besonders vorteilhaft ist es, wenn die Stellglieder an eine Steuerung angeschlossen sind, die die Wirkverbindung eines jeden Piezotranslators mit dem Abtriebselement erst dann aufhebt, nachdem die Wirkverbindung des Abtriebselementes mit dem anderen Piezotranslator hergestellt ist und dieser mit der Bewegungsübertragung begonnen hat. Dadurch ist sichergestellt, daß sich die Verstellbewegungen der beiden Piezotranslatoren überlappen und es im kritischen Moment des Antriebswechsels bei einer absolut gleichförmigen Stellgeschwindigkeit bleibt. Man erhält also einen kontinuierlichen Antrieb ohne Kraftflußunterbrechung unter Vermeidung des Nachteils, daß die gewünschte Verstellbewegung des Abtriebselementes zur Rückstellung eines Translators unterbrochen werden muß. Daraus resultieren größere Zustellgeschwindigkeiten und höhere Zustellgenauigkeiten.

Zweckmäßig sind auch die Piezotranslatoren etwa parallel zur Abtriebsrichtung angeordnet und wirken über Schwenkarme auf das Abtriebselement ein, so daß sich eine Hebelübersetzung ergibt. Dabei können die Schwenkarme durch weitere Federn gegen die Piezotranslatoren gedrückt werden, damit eine spielfreie Lagerung zu jedem Zeitpunkt sichergestellt ist.

Es liegt außerdem im Rahmen der Erfindung, daß jeweils mehrere gleichsinnig wirkende Piezotranslatoren parallel geschaltet sind, so daß mehrere Translatoren gleichzeitig am Abtriebselement angreifen.

Eine besonders kompakte und zugleich spielfreie Bauweise ergibt sich dadurch, daß je ein Piezotranslator zusammen mit seinem zugehörigen Stellglied in einem Monolith zusammengefaßt sind. Die Klemm- und die Verstellbewegung werden dann von einem gemeinsamen Element ausgeführt.

Ebenso kann anstelle eines separaten Stellgliedes für jeden Piezotranslator ein gemeinsames Stellglied vorgesehen werden, das abwechselnd auf die Piezotranslatoren über eine Wippe einwirkt, an der das oben aufgeführte Federelement im Sinne einer Herbeiführung der Wirkverbindung mit dem Abtriebselement angreift. Hierdurch bleibt weiterhin sichergestellt, daß die Stellglieder, ausgehend von einer gemeinsamen Basis, die erforderlichen Relativbewegungen durchführen, wodurch die Temperatur-, Alterungs- und sonstigen Umwelteinflüsse keine Wirkung auf die Klemmungen haben.

Für einen gleichmäßigen und kontinuierlichen Antrieb ist es zweckmäßig, daß die Piezotranslatoren mit gleichen, zeitlich versetzten linearen Spannungsverläufen gesteuert werden, wobei sie durch das jeweilige Stellglied in Wirkverbindung mit dem Abtriebselement gebracht werden, wenn ihre durch Anlegen der Spannung hervorgerufene Längenänderung der gewünschten Verstellrichtung entspricht. Durch die gleiche Längenänderungsgeschwindigkeit ergibt sich somit auch in den Überlappungsbereichen des gleichzeitigen Antriebs keine Störung der Bewegungsübertragung.

Es liegt außerdem im Rahmen der Erfindung anstelle der Piezotranslatoren elektrostriktive oder magnetostriktive Elemente einzusetzen, die beim Anlegen einer elektrischen Spannung ebenfalls definierte Längenänderungen durchführen.

Natürlich kann auch das Abtriebselement ortsfest angeordnet sein und die Verstelleinrichtung selbst bewegt werden und die gewünschte Verstellbewegung durchführen, was einer kinematischen Umkehr entspräche.

Weitere Merkmale der Erfindung ergeben sich aus nachfolgend beschriebenen Ausführungsbeispielen und anhand der Zeichnungen; dabei zeigen:
- Figur 1a: eine schematische Seitenansicht der erfindungsgemäßen Verstelleinrichtung mit einem Piezoantrieb;
- Figur 1b: einen Schnitt entlang der Linie I-I aus Figur la;
- Figur 2: eine perspektivische Seitenansicht einer alternativen Ausführungsform;
- Figur 3: ein Spannungs-Zeitdiagramm von zwei Piezotranslatoren und zwei Stellgliedern;
- Figur 4: einen Querschnitt durch die Verstelleinrichtung mit parallel angeordneten Stellgliedern und
- Figur 5: eine Prinzipskizze einer aus einem Monolith bestehenden Verstelleinrichtung.

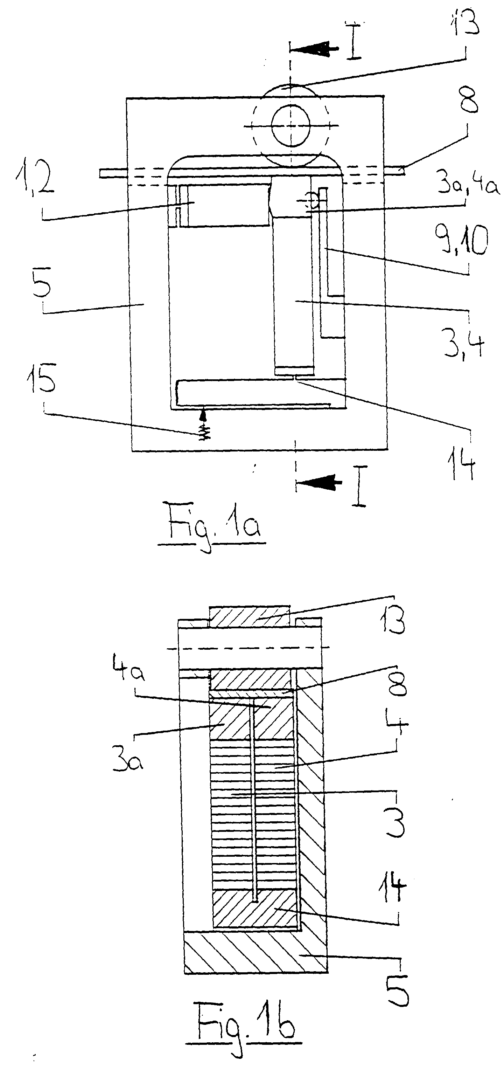

Die in den Figuren 1a und 1b dargestellte Verstelleinrichtung besteht aus zwei parallelen, in Figur 1a hintereinander angeordneten Piezotranslatoren 1 und 2, die parallel zur Vorschubrichtung des Abtriebselementes angeordnet und für den Vorschub verantwortlich sind, und aus zwei dazu senkrecht angeordneten, ebenfalls hintereinanderstehenden Stellgliedern 3 und 4, die die Wirkverbindung zu dem Abtriebselement 8 in Form eines Bandes herbeiführen. In Figur 1a ist jeweils nur der vordere Piezotranslator 1 und das vordere Stellglied 3 sichtbar. Sowohl die Piezotranslatoren 1 und 2 als auch die Stellglieder 3 und 4 erfahren durch Anlegen von elektrischer Spannung definierte Längenänderungen.

Die beiden Piezotranslatoren 1 und 2 sind mit ihrem einen Ende an einer gemeinsamen Basis 5, etwa einem Gehäuseteil, festgelegt, während sie mit ihrem anderen Ende an Verlängerungen 3a bzw. 4a der Stellglieder 3 bzw. 4 angreifen und über diese in Wirkverbindung mit einem Abtriebselement 8 gelangen. Gegenüber den Piezotranslatoren 1 und 2 greifen an den Verlängerungen 3a und 4a zwei hintereinander angeordnete Federn 9 und 10 an, die für eine spielfreie Anlage und somit für eine Bewegungsübertragung von den Piezotranslatoren 1 und 2 auf das Abtriebselement 8 sorgen.

Die beiden Stellglieder 3 und 4, stehen auf einer gemeinsamen Basis 14, an deren Unterseite ein Federelement 15 angreift, durch welches sie in Richtung des Abtriebselementes 8 gedrückt werden. Eine Andruckrolle 13 stellt die Bewegungsübertragung aufgrund von Haftreibung sicher. Durch abwechselnde Längenverkürzung der beiden Stellglieder 3 und 4 werden die zugehörigen Piezotranslatoren 1 und 2 außer Wirkverbindung gebracht, wobei jeweils der abgehobene Piezotranslator zur Vorbereitung der nächsten Bewegungsübertragung zurückgestellt wird. Durch die Vorspannung des Federelementes 15 und durch das Anbringen an einer gemeinsamen Basis 14 werden Einflüsse durch Temperatur, Alterung oder sonstige Störungen kompensiert.

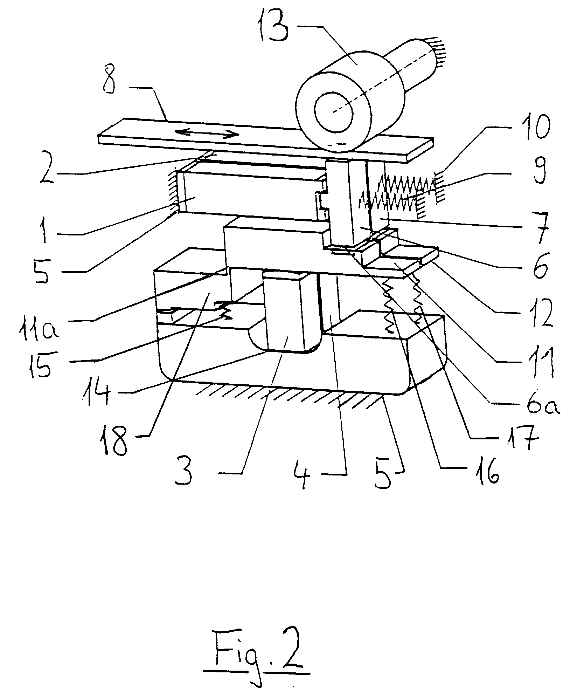

In Figur 2 ist eine alternative Ausführungsform in perspektivischer Seitenansicht dargestellt. Dieser Piezoantrieb weist zusätzliche Stellarme 11 und 12 auf, die zwischen den Stellgliedern 3 und 4 und zusätzlichen Schwenkarmen 6 und 7 positioniert sind und ungefähr senkrecht zu beiden stehen. Die Stellarme 11 und 12 sind an ihrem einen Ende an einer gemeinsamen Basis 18 montiert. Auf ihre Unterseite wirkt ein Federelement 15 in Form einer Zugfeder ein, wodurch die Stellarme an ihrem gegenüberliegenden Ende die Schwenkarme 6 und 7 in Richtung auf das Abtriebselement 8 drücken. Damit eine Längenverkürzung eines der beiden Stellglieder 3 bzw. 4 ein Abheben des zugehörigen Schwenkarms 6 bzw. 7 hervorruft, sind an den jeweiligen, der Basis 18 gegenüberliegenden Enden der Stellarme 11 bzw. 12 weitere Zugfedern 16 bzw. 17 angebracht, die eine spielfreie Anlage der Stellarme 11 und 12 an den Stellgliedern 3 und 4 sicherstellen.

Die jeweilige mittige Anlage der Piezotranslatoren 1 und 2 an den um ein Gelenk 6a bzw. um ein nicht dargestelltes Gelenk 7a schwenkbaren Schwenkarmen 6 und 7 bzw. der Stellglieder 3 und 4 an den um den Punkt 11a bzw. den nicht dargestellten Punkt 12a schwenkbaren Stellarmen 11 und 12 bewirkt aufgrund der Hebelverhältnisse eine Verdoppelung der eigentlichen Stellbewegungen. Durch die speziellen Hebelkonstruktionen wird außerdem das Auftreten von Querkräften vermieden.

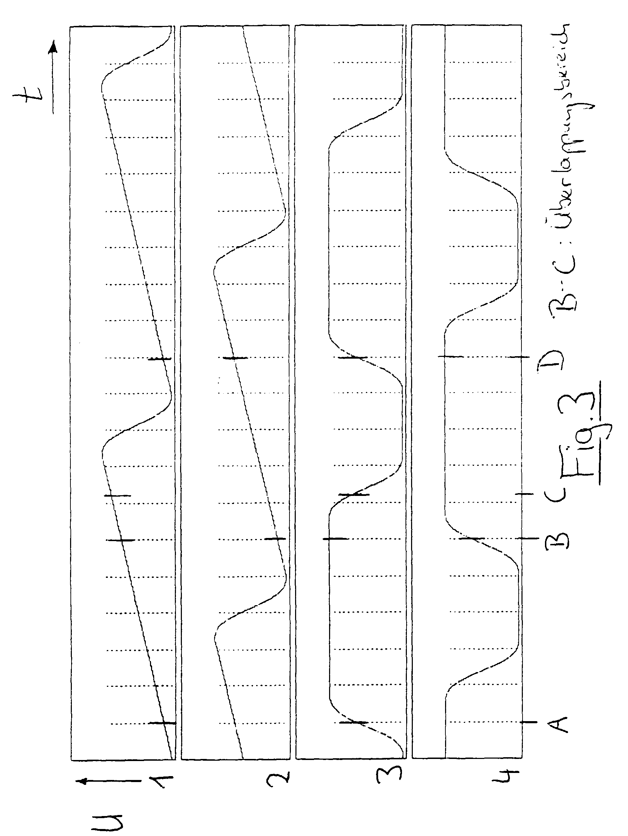

Die Spannungsverläufe der beiden Piezotranslatoren 1 und 2 und der beiden Stellglieder 3 und 4 sind untereinander in Fig. 3 dargestellt. Wie hieraus zu erkennen ist, gelangt das Stellglied 3 am Punkt A in Wirkverbindung mit dem Abtriebselement, wodurch der Piezotranslator 1 eine seinem Spannungsverlauf entsprechende Verstellbewegung überträgt. Im Punkt B tritt auch das Stellglied 4 mit dem Abtriebselement in Wirkverbindung und der Piezotranslator 2 überträgt hierauf, wie aus den gleichen Spannungsverläufen der beiden Piezotranslatoren ersichtlich, ebenfalls eine Verstellbewegung, und zwar mit gleicher Geschwindigkeit, wie Piezotranslator 1. Im Folgeabschnitt zwischen B und C befinden sich also sowohl der Piezotranslator 1 als auch der Piezotranslator 2 in Wirkverbindung mit dem Abtriebselement. Erst im Punkt C, d.h. kurz bevor Piezotranslator 1 seine maximale Ausdehnung erreicht hat, wird die Wirkverbindung des Stellgliedes 3 mit dem Abtriebselement aufgehoben. Der Piezotranslator 2 führt dann alleine die Verstellbewegung durch, und der Piezotranslator 1 wird in die Ausgangsstellung zurückgefahren.

Rechtzeitig vor der maximalen Ausdehnung des Piezotranslators 2 gelangt im Punkt D Piezoatranslator 1 wieder in Verbindung und übernimmt, zunächts gemeinsam mit diesem, danach allein, den weiteren Vorschub. Die Schrittfrequenz liegt in der Größenordnung von 50 bis 100 Hz, die Vorschubgeschwindigkeit bei etwa 1 mm/sec.

Aufgrund des breiten, sich überlappenden Bereichs zwischen B und C ist also eine schnelle, kontinuierliche und gleichförmige Verstellbewegung des Abtriebselementes sichergestellt.

Selbstverständlich funktioniert die Stelleinrichtung auch in Gegenrichtung, indem durch entsprechenden Spannungsabfall ein Zusammenziehen der Piezotranslatoren ausgelöst wird.

Es liegt außerdem im Rahmen der Erfindung, daß das Federelement auf die Andruckrolle in Richtung der Stellglieder wirkt und so das Aufrechterhalten einer Wirkverbindung von Piezotranslator und Abtriebselement sicherstellt.

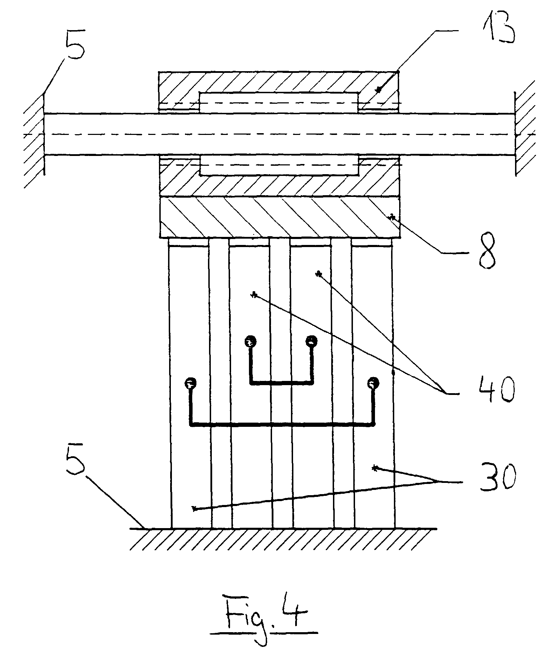

Figur 4 zeigt einen Querschnitt durch eine Verstelleinrichtung, bei der jeweils mit zwei Paaren von Stellgliedern 30 und 40 gearbeitet wird, die jeweils paarweise über eine nicht dargestellte Feder in Wirkverbindung mit dem Abtriebselement 8 treten. Demgemäß ist durch eine mehrfach parallele Anordnung der Antriebselemente Piezotranslator und Stellglied eine Bewegungsübertragung auch auf breitere Abtriebselemente möglich.

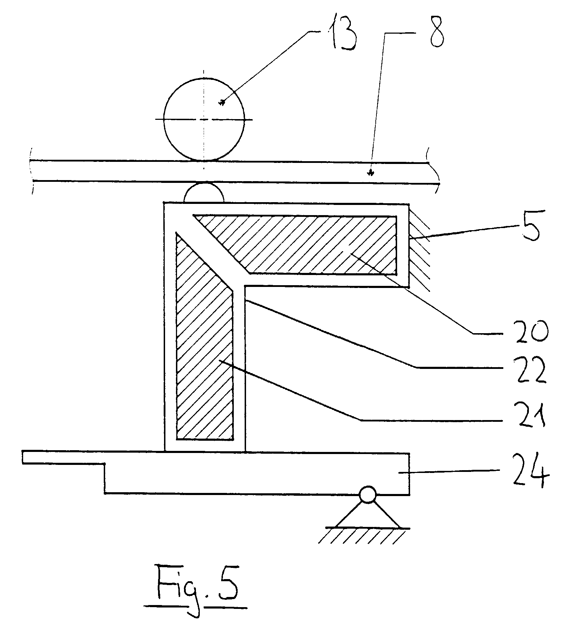

In Figur 5 ist eine Verstelleinrichtung dargestellt, bei der jeweils ein Piezotranslator 20 und ein Stellglied 21 in einem Monolith 22 zusammengefaßt sind. Dadurch führt der Monolith sowohl die Vorschubbewegung als auch die Klemmbewegung durch. Parallel zum Monolith 22 ist ein weiterer, hier nicht dargestellter Monolith 23 auf einem gemeinsamen Federelement 24 montiert. Beide Monolithen werden abwechselnd so angesteuert, daß das Abtriebselement gleichförmig und kontinuierlich verstellt wird.

## Patentansprüche

1. Verstelleinrichtung mit einem Piezoantrieb, insbesondere für feinmechanisch optische Geräte und dergleichen, bestehend aus zumindest zwei Piezotranslatoren, die durch Anlegen einer elektrischen Spannung eine Längenänderung erfahren und abwechselnd mit einem Abtriebselement in Wirkverbindung gelangen derart, daß bei bestehender Wirkverbindung eine Bewegungsübertragung auf das Abtriebselement erfolgt, wogegen bei aufgehobener Wirkverbindung der Piezotranslator eine Rückstellung zur Vorbereitung der nächsten Bewegungsübertragung erfährt, so daß das Abtriebselement die gewünschte Verstellbewegung durchführt,
dadurch gekennzeichnet,
daß die Piezotranslatoren (1, 2) durch zumindest ein Federelement (15) in Wirkverbindung mit dem Abtriebselement (8) bringbar sind, und daß jedem Piezotranslator (1, 2) ein Stellglied (3, 4) zugeordnet ist, das die Wirkverbindung seines Piezotranslators (1, 2) mit dem Abtriebselement (8) aufhebt.

2. Verstelleinrichtung nach Anspruch 1,
dadurch gekennzeichnet,
daß das Federelement (15) zur Herbeiführung der Wirkverbindung zwischen Piezotranslator (1, 2) und Abtriebselement (8) auf Letzteres einwirkt.

3. Verstelleinrichtung nach Anspruch 1,
dadurch gekennzeichnet,
daß die Stellglieder (3, 4) an einer gemeinsamen Basis (14) montiert sind und das Federelement (15) auf diese einwirkt.

4. Verstelleinrichtung nach Anspruch 1,
dadurch gekennzeichnet,
daß die Stellglieder (3, 4) über Stellarme (11, 12) die Wirkverbindung ihrer zugehörigen Piezotranslatoren (1, 2) mit dem Abtriebselement (8) herbeiführen, daß die Stellarme (11, 12) an einer gemeinsamen Basis (18) montiert sind und das Federelement (15) auf diese Basis (18) einwirkt.

5. Verstelleinrichtung nach Anspruch 4,
dadurch gekennzeichnet,
daß die Stellarme (11, 12) durch Federn (16, 17) gegen die Stellglieder (3, 4) gedrückt werden.

6. Verstelleinrichtung nach Anspruch 1,
dadurch gekennzeichnet,
daß die Stellglieder (3, 4) ihrerseits aus Piezoelementen oder elektro- oder magnetostriktiven Elementen bestehen.

7. Verstelleinrichtung nach Anspruch 1,
dadurch gekennzeichnet,
daß die Stellglieder (3, 4) an eine Steuerung angeschlossen sind, die die Wirkverbindung eines jeden Piezotranslators (1, 2) mit dem Abtriebselement erst dann aufhebt, nachdem die Wirkverbindung des Abtriebselementes (8) mit dem anderen Piezotranslator (1,2) hergestellt ist und dieser mit der Bewegungsübertragung begonnen hat.

8. Verstelleinrichtung nach Anspruch 1,
dadurch gekennzeichnet,
daß die Piezotranslatoren (1, 2) etwa parallel zur Abtriebsrichtung angeordnet sind.

9. Verstelleinrichtung nach Anspruch 1,
dadurch gekennzeichnet,
daß die Piezotranslatoren (1,2) über Schwenkarme (6, 7) auf das Abtriebselement (8) einwirken.

10. Verstelleinrichtung nach Anspruch 9,
dadurch gekennzeichnet,
daß die Schwenkarme (6, 7) durch weitere Federn (9, 10) gegen die Piezotranslatoren (1, 2) gedrückt werden.

11. Verstelleinrichtung nach Anspruch 1,
dadurch gekennzeichnet,
daß jeweils mehrere gleichsinnig wirkende Piezotranslatoren (1, 2) parallel geschaltet sind.

12. Verstelleinrichtung nach Anspruch 1,
dadurch gekennzeichnet,
daß anstelle der Piezotranslatoren (1, 2) elektrostriktive oder magnetostriktive Elemente eingebaut sind.

13. Verstelleinrichtung nach Anspruch 6,
dadurch gekennzeichnet,
daß je ein Piezotranslator (20) zusammen mit seinem zugehörigen Stellglied (21) in einem Monolith (22) zusammengefaßt ist.

14. Verstelleinrichtung nach Anspruch 1,
dadurch gekennzeichnet,
daß anstelle eines separaten Stellgliedes (3, 4) für jeden Piezotranslator (1, 2) ein gemeinsames Stellglied vorgesehen ist, das über eine Wippe abwechselnd auf die Piezotranslatoren (1, 2) einwirkt.

15. Verstelleinrichtung nach Anspruch 1,
dadurch gekennzeichnet,
daß die Piezotranslatoren (1, 2) mit gleichen, zeitlich versetzten Spannungsverläufen gesteuert werden, wobei sie durch das jeweilige Stellglied (3, 4) in Wirkverbindung mit dem Abtriebselement (8) gebracht werden, wenn ihre durch Anlegen der Spannung hervorgerufene Längenänderung der gewünschten Verstellrichtung entspricht.

16. Verstelleinrichtung nach Anspruch 1,
dadurch gekennzeichnet,
daß das Abtriebselement (8) ortefest angeordnet ist und die Verstelleinrichtung die gewünschte Verstellbewegung durchführt.

## Claims

1. Adjustment apparatus including a piezo-electric drive, in particular for precision engineered optical equipment and the like, consisting of at least two piezo-electric translators which experience a change in length when an electrical tension is applied and alternately actively connect with an output element such that, when an active connection exists, a transfer of movement onto the output element occurs, whereas, when an active connection is removed, the piezo-electric translator experiences a reset in preparation for the next transfer of movement, with the result that the output element performs the desired adjustment movement,
characterised in that
the piezo-electric translators (1, 2) can be made to actively connect with the output element (8) by means of at least one spring element (15), and an actuating element (3, 4) is associated with each piezo-electric translator (1, 2), the actuating element removing the active connection of its piezo-electric translator (1, 2) with the output element (8).

2. Adjustment apparatus according to Claim 1, characterised in that, to bring about the active connection between piezo-electric translator (1, 2) and output element (8), the spring element (15) acts on said output element.

3. Adjustment apparatus according to Claim 1, characterised in that the actuating elements (3, 4) are mounted on a common base (14) and the spring element (15) acts on said base.

4. Adjustment apparatus according to Claim 1, characterised in that the actuating elements (3, 4) bring about the active connection of their associated piezo-electric translators (1, 2) with the output element (8) by way of actuating arms (11, 12), the actuating arms (11, 12) being mounted on a common base (18) and the spring element (15) acting on said base (18).

5. Adjustment apparatus according to Claim 4, characterised in that the actuating arms (11, 12) are urged against the actuating elements (3, 4) by means of springs (16, 17).

6. Adjustment apparatus according to Claim 1, characterised in that the actuating elements (3, 4) themselves consist of piezo-electric elements or electrostrictive or magnetostrictive elements.

7. Adjustment apparatus according to Claim 1, characterised in that the actuating elements (3, 4) are connected to a control arrangement which removes the active connection of each piezo-electric translator (1, 2) with the output element only after the active connection of the output element (8) with the other piezo-electric translator (1, 2) has been established and said other piezo-electric translator (1, 2) has begun the transfer of movement.

8. Adjustment apparatus according to Claim 1, characterised in that the piezo-electric translators (1, 2) are disposed approximately parallel to the direction of output.

9. Adjustment apparatus according to Claim 1, characterised in that the piezo-electric translators (1, 2) act upon the output element (8) by way of swivel arms (6, 7).

10. Adjustment apparatus according to Claim 9, characterised in that the swivel arms (6, 7) are urged against the piezo-electric translators (1, 2) by means of further springs (9, 10).

11. Adjustment apparatus according to Claim 1, characterised in that in each case a number of piezo-electric translators (1, 2), which operate in the same sense, are connected in parallel.

12. Adjustment apparatus according to Claim 1, characterised in that electrostrictive or magnetostrictive elements are installed in place of the piezo-electric translators (1, 2).

13. Adjustment apparatus according to Claim 6, characterised in that each piezo-electric translator (20) and its associated actuating element (21) are combined into a monolith (22).

14. Adjustment apparatus according to Claim 1, characterised in that, instead of a separate actuating element (3, 4) for each piezo-electric translator (1, 2), a common actuating element is provided which acts on the piezo-electric translators (1, 2) alternately by way of a rocking beam.

15. Adjustment apparatus according to Claim 1, characterised in that the piezo-electric translators (1, 2) are controlled by like, temporally staggered voltage waveforms, said translators being made to actively connect with the output element (8) by means of the respective actuating element (3, 4) when their change in length, as caused by the application of the voltage, corresponds to the desired adjustment direction.

16. Adjustment apparatus according to Claim 1, characterised in that the output element (8) is arranged to be stationary and the adjustment apparatus performs the desired adjustment movement.

## Revendications

1. Dispositif de réglage à actionnement piézo-électrique, en particulier pour des appareils optiques de mécanique de précision et du même genre, comprenant au moins deux translateurs piézo-électriques qui, par application d'une tension électrique, subissent une variation de longueur et, altemativement, viennent en liaison active avec un élément de dérive de sorte que, si une liaison active existe, une transmission de déplacement se produit sur l'élément de dérive, alors que par contre, si la liaison active est supprimée, le translateur piézo-électrique revient à l'état initial pour préparer la prochaine transmission de déplacement, de sorte que l'élément de dérive effectue le déplacement de réglage souhaité, caractérisé en ce que les translateurs piézo-électriques (1, 2) peuvent être mis en liaison active avec l'élément de dérive (8) au moyen d'au moins un élément formant ressort (15), et en ce que, à chaque translateur piézo-électrique est associé un composant de réglage (3, 4) qui supprime la liaison active de son translateur piézo-électrique (1, 2) avec l'élément de dérive (8).

2. Dispositif de réglage selon la revendication 1, caractérisé en ce que l'élément formant ressort (15) agit, à la mise en oeuvre de la liaison active entre le translateur piézo-électrique (1, 2) et l'élément de dérive (8), sur ce dernier.

3. Dispositif de réglage selon la revendication 1, caractérisé en ce que les composants de réglage (3, 4) sont montés sur une base commune (14) et en ce que l'élément formant ressort (15) agit sur celle-ci.

4. Dispositif de réglage selon la revendication 1, caractérisé en ce que les composants de réglage (3, 4) mettent en oeuvre la liaison active de leurs translateurs piézo-électriques (1, 2) associés avec l'élément de dérive (8) par l'intermédiaire de bras de réglage (11, 12), en ce que les bras de réglage (11, 12) sont montés sur une base commune (18) et en ce que l'élément formant ressort (15) agit sur cette base (18).

5. Dispositif de réglage selon la revendication 4, caractérisé en ce que les bras de réglage (11, 12) sont poussés par des ressorts (16, 17) contre les composants de réglage (3, 4).

6. Dispositif de réglage selon la revendication 1, caractérisé en ce que les composants de réglage (3, 4) comprennent pour leur part des éléments piézo-électriques ou des éléments à striction électrique ou magnétique.

7. Dispositif de réglage selon la revendication 1, caractérisé en ce que les composants de réglage (3, 4) sont raccordés à une commande qui supprime la liaison active de l'un des translateurs piézo-électriques (1, 2) avec l'élément de dérive, seulement après que la liaison active de l'élément de dérive (8) est établie avec l'autre translateur piézo-électrique (1, 2) et que celui-ci a commencé la transmission de déplacement.

8. Dispositif de réglage selon la revendication 1, caractérisé en ce que les translateurs piézo-électriques (1, 2) sont disposés sensiblement parallèlement à la direction de dérive.

9. Dispositif de réglage selon la revendication 1, caractérisé en ce que les translateurs piézo-électriques (1, 2) agissent sur l'élément de dérive (8) par l'intermédiaire de bras pivotants (6, 7).

10. Dispositif de réglage selon la revendication 1, caractérisé en ce que les bras pivotants (6, 7) sont poussés contre les translateurs piézo-électriques (1, 2) par d'autres ressorts (9, 10).

11. Dispositif de réglage selon la revendication 1, caractérisé en ce que respectivement plusieurs translateurs piézo-électriques (1, 2) agissant dans le même esprit sont branchés en parallèle.

12. Dispositif de réglage selon la revendication 1, caractérisé en ce que des éléments à striction électrique ou magnétique sont montés à la place des translateurs piézo-électriques (1, 2).

13. Dispositif de réglage selon la revendication 6, caractérisé en ce que chaque translateur piézo-électrique (20) est réuni avec son composant de réglage (21) associé dans un monolithe (22).

14. Dispositif de réglage selon la revendication 1, caractérisé en ce qu'on prévoit pour chaque translateur piézo-électrique (1, 2), à la place d'un composant de réglage séparé (3, 4), un composant de réglage commun qui agit alternativement sur les translateurs piézo-électriques (1, 2) par l'intermédiaire d'une bascule.

15. Dispositif de réglage selon la revendication 1, caractérisé en ce que les translateurs piézo-électriques (1, 2) sont commandés avec les mêmes courbes de tension déphasées en temps, de façon à être mis en liaison active avec l'élément de dérive (8) grâce à chaque composant de réglage (3, 4), quand leur variation de longueur provoquée par l'application de la tension correspond à la direction de réglage souhaitée.

16. Dispositif de réglage selon la revendication 1, caractérisé en ce que l'élément de dérive (8) est disposé de manière fixe et que le dispositif de réglage réalise le déplacement de réglage souhaité.
